# EUROPEAN PATENT APPLICATION

(11) **EP 2 016 987 A1**
(43) Date of publication of application: **21.01.2009**
(21) Application number: 08012415.9
(22) Date of filing: 09.07.2008
(51) Int. Cl.: B01D 29/68

(54) **Method and system for backwashing a filter**

(30) Priority: 09.07.2007 US 774706
(71) Applicant: Odis Irrigation Equipment Limited, Petach Tikva 49130 (IL)
(72) Inventor: Bomze, Vladimir, Hadera 38236 (IL)
(74) Representative: Grünecker, Kinkeldey, Stockmair & Schwanhäusser Anwaltssozietät

(57) **Abstract**

A self backwashing filtering unit, including: a container, adapted to contain filtered liquid; a filter that filters unfiltered liquid at a first pressure to admit the filtered liquid into the container; a pump, adapted to receive filtered liquid, to receive unfiltered liquid and to provide pressurized filtered liquid at a second pressure that is higher than the first pressure; and a hydraulic rotating backwasher that is driven by the pressurized filtered liquid, adapted to backwash the filter by jetting the pressurized filtered liquid onto the filter.

## Description

### Field of the invention

The invention relates to a self backwashing filtering unit and a method for backwashing a filter.

### Background of the invention

Filtrating of liquids is a common practice in many industries and in everyday life, wherein the filtrating is typically carried out by filters and filtering units made for this purpose. The filtrating of liquids typically includes separating contaminants from unfiltered liquid, to provide filtered liquid.

During that process contaminants that where filtered out from the unfiltered liquid tend to accumulate at one or more areas of the filtering unit, and especially on or in the filter. Many methods have been offered in order to either prevent the accumulation of contaminants in or on the filter, or to clean the filter from the accumulated contaminants.

One common practice of cleaning the filter is a process known as backwashing the filter, in which a cleaning liquid, such as but not limited to the filtered liquid, is jetted at high pressure onto the filter on the opposite direction to the normal flow of liquid during the filtering (hence - backwashing).

Many a time, in order to backwashing a filtering unit, a termination of the filtering process is required, and the backwashing takes place after the filtering unit has been adapted to a distinctive process of backwashing. Backwashing during the filtering process is also known, but current solution show difficulties of backwashing the filter in an even, economical way, offering both a high level cleaning of the filter, while spending as little cleaning liquid and as little power as possible. Moreover, such filtering units typically demand complicated means of incorporating the backwashing process. It is therefore desirable to find a reliable and simple means of cleaning a self cleaning filtering unit.

### Summary of the invention

A self backwashing filtering unit, including: a container, adapted to contain filtered liquid; a filter that filters unfiltered liquid at a first pressure to admit the filtered liquid into the container; a pump, adapted to receive filtered liquid, to receive unfiltered liquid and to provide pressurized filtered liquid at a second pressure that is higher than the first pressure; and a hydraulic rotating backwasher that is driven by the pressurized filtered liquid, adapted to backwash the filter by jetting the pressurized filtered liquid onto the filter.

A method for backwashing a filter, the method includes: providing pressurized filtered liquid at a second pressure that is higher than the first pressure, wherein the providing includes receiving filtered liquid, and receiving unfiltered liquid; backwashing the filter by jetting pressurized filtered liquid onto the filter by a hydraulic rotating backwasher, that is driven by filtered liquid.

### Brief description of the drawings

The foregoing and other objects, features, and advantages of the present invention will become more apparent from the following detailed description when taken in conjunction with the accompanying drawings. In the drawings, similar reference characters denote similar elements throughout the different views, in which:

Figure 1 illustrates a cross-section view of a self backwashing filtering unit, according to an embodiment of the invention.

Figures 2 and 3 illustrate a cross sectional view of a filter and contaminant pipe, according to an embodiment of the invention;

Figure 4 illustrates a method for backwashing a filter; and

Figures 5 and 6 illustrate a cross-section view of a self backwashing filtering unit, according to another embodiment of the invention

### Detailed description of the drawings

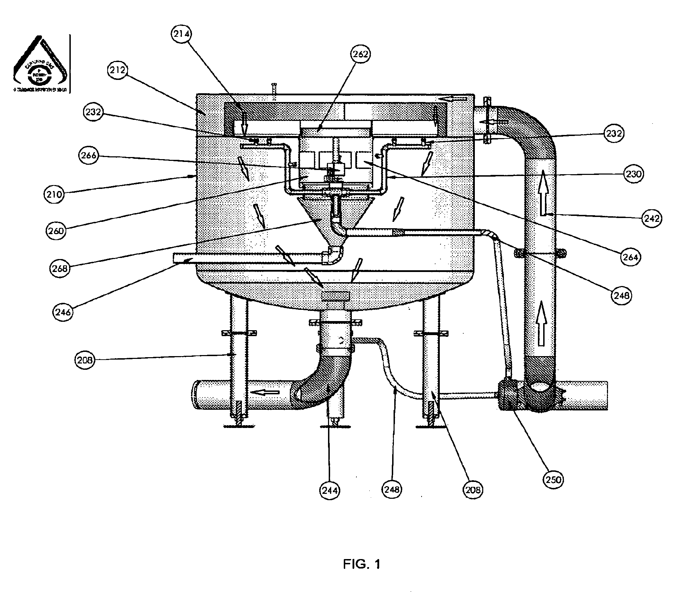

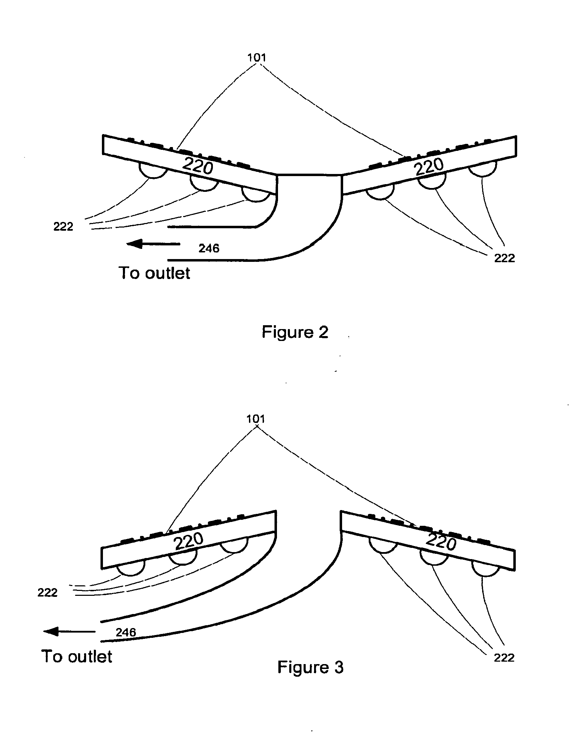

Figure 1 illustrates a cross-section view of self backwashing filtering unit 200, according to an embodiment of the invention. Self backwashing filtering unit 200 includes container 210 which is adapted to contain filtered liquid. Filter 220 filters unfiltered liquid at a first pressure to admit the filtered liquid into container 210. Pump 250 is adapted to receive filtered liquid, to receive unfiltered liquid and to provide pressurized filtered liquid at a second pressure that is higher than the first pressure. Hydraulic rotating backwasher 230, which is driven by the pressurized filtered liquid, is adapted to backwash filter 220 (and thus to remove residual contaminants 101, which are illustrated in figures 2 and 3, from filter 220) by jetting pressurized filtered liquid onto filter 220.

It is noted that different embodiments of the invention are self backwashing filtering units that are adapted for the filtering of one or more types of liquids, wherein some of the embodiments of the invention are adapted specifically for a certain type of liquid (which may be needed, for example, for liquids that have specific chemical properties which demand specific adaption), while other embodiments of the invention are adapted for numerous types of liquids. In particular, some of the embodiments of the invention are adapted to filter and to treat water, in which some of these embodiments are adapted to filter and to treat water that is used in irrigation systems.

According to an embodiment of the invention, self backwashing filtering unit 200 includes one or more supports 208. According to an embodiment of the invention, unfiltered liquid enters self backwashing filtering unit 200 by one or more unfiltered liquid inlet pipes 242, to be filtered by filter 220 and admitted into container 210. Conveniently, container 210 includes an outlet for the filtered liquid, such as filtered liquid outlet pipe 244.

During the filtration process, contaminants accumulate in or on filter 220 (depending on whether a depth or a surface filter is used) into residual contaminants 101, which gradually develop an increasing flow resistance, which then disrupts the filtering process of filter 220, potentially causing plug up of filter 220.

Hydraulic rotating backwasher 230 is adapted to backwash filter 220 by jetting filtered liquid at a second pressure, which is much higher than the first pressure, onto filter 220. The jetted filtered liquid causes at least a portion of residual contaminants 101 to separate from filter 220, thus returning the flow of liquid through filter 220 to a desired level.

Conveniently, hydraulic rotating backwasher 230 includes one or more jetting heads 232, which are adapted to jet filtered liquid at high pressure onto filter 220. Conveniently, the jetting of the filtered liquid by the one or more jetting heads 232 results the separation of at least a portion of residual contaminants 101 from filter 220. According to an embodiment of the invention, at least some of jetting heads 232 are positioned at an oblique angle in relation to filter 220, in order to force at least a portion of the separated residual contaminants 101 that was separated from filter 220 in a desired direction, such as in the direction of a residue outlet pipe 246. It is further noted that according to an embodiment of the invention, filter 220 is shaped as to facilitate the forcing of at least a portion of separated residual contaminants 101 in the desired direction, which is, conveniently, the direction of residue outlet pipe 246. For example, in the embodiment of the invention which is illustrated in figure 1, filter 220 has an oblique surface, whereby the slope is designed for that purpose. Conveniently, filter 220 defined an aperture through which the residue can propagate towards residue outlet pipe. Conveniently, filter 220 fully surrounds the aperture.

According to an embodiment of the invention, at least some of jetting heads 232 are adapted to tilt in different angles in relation to filter 220. According to different embodiments of the invention, said tilting could be adjusted manually by an operator of self backwashing filtering unit 200, or could be applied autonomously by self backwashing filtering unit 200.

Conveniently, hydraulic rotating backwasher 230 receives the pressurized filtered liquid from pump 250 via high pressure filtered liquid pipe 248. According to an embodiment of the invention, pump 250 receives filtered liquid from filtered liquid outlet pipe 244, via filtered liquid pump inlet pipe 254, but it is noted that according to different embodiments of the invention, pump 250 can receive filtered liquid from another source. It is noted that according to an embodiment of the invention, pump 250 is internal to container 210.

Conveniently, pump 250 receives unfiltered liquid from unfiltered liquid inlet pipe 242, wherein pump 250 is adapted to utilize said unfiltered liquid to pressurize filtered liquid to the second pressure. Every person skilled in the art understands that the second pressure is higher than the first pressure to facilitate the backwashing of filter 220.

In order to effectively separate residual contaminants 101 from filter 220, hydraulic rotating backwasher 230 is adapted to rotate around an axis of rotation (conveniently, the axis of rotation is a symmetry axis of filter 220, but it is not necessarily so). The rotating action of hydraulic rotating backwasher 230 enables each jetting head 232 to jet filtered liquid onto different parts of filter 220. Different embodiments of the invention implement different ways of rotating hydraulic rotating backwasher 230. According to an embodiment of the invention, hydraulic rotating backwasher 230 includes one or more thrusting jetting heads 234, which are adapted to facilitate rotation of hydraulic rotating backwasher 230 by jetting high pressure filtered liquid in at least a partially opposing direction to the direction of rotation of hydraulic rotating backwasher 230. According to an embodiment of the invention, at least one jetting head 232 is adapted both to: (a) separate at least a portion of residual contaminants 101 from filter 220 by jetting filtered liquid at high pressure onto filter 220; and (b) rotate hydraulic rotating backwasher 230 by jetting high pressure filtered liquid in a direction which is at least a partially opposing direction of the rotation of hydraulic rotating backwasher 230. Conveniently, said jetting heads 232 are positioned in an oblique angle in relation to both filter 220 and to the direction of rotation of hydraulic rotating backwasher 230, as to carry out both of the operations.

According to an embodiment of the invention, self backwashing filtering unit 200 includes one or more protrusions (not shown) that are adapted to facilitate the rotation of the hydraulic rotating backwasher by countering filtered liquid that is jetted from one or more jetting heads 232, thrusting jetting heads 234, and/or secondary filter backwashing jetting heads 236. It is noted that according to some embodiments of the invention, filter 220 is adapted to revolve. According to such an embodiment of the invention, filter 220 is adapted to revolve as a result of filtered liquid that is jetted upon the one or more protrusions which are included in filter 220.

According to an embodiment of the invention, filter 220 is a strainer. It is noted that contaminant accumulation is typical of many sort of filters and strainers, and that different embodiment of the invention are adapted to handle contaminant accumulations of different types of filters and strainers that suffer from accumulation of contaminants, that are suitable to be backwashed.

According to an embodiment of the invention, self backwashing filtering unit 200 is a gravitational filtering unit, in which filter 220 is a gravitational filter, and liquid is passing through filter 220 into container 210 as a result of the gravitational force that is applied to the liquid. According to an embodiment of the invention, self backwashing filtering unit 200 includes unfiltered liquid compartment 212, which is adapted to contain unfiltered liquid before it is filtered by filter 220. According to an embodiment of the invention, unfiltered liquid compartment 212 is included in container 210. According to an embodiment of the invention, unfiltered liquid compartment 212 is a compartment of container 210.

According to an embodiment of the invention, filter 220 is a circular filter. According to an embodiment of the invention, unfiltered liquid compartment 212 includes barrier 214, wherein unfiltered liquid that enters unfiltered liquid compartment 212 via unfiltered liquid inlet pipe 242 is able to reach filter 220 only by spilling over barrier 214 (which is conveniently of circular shape). In this way barrier 214 assists in setting the pressure of the unfiltered liquid which arrives to filter 220 to the first pressure, and the spreading of the unfiltered liquid to multiple parts of filter 220, according to an embodiment of the invention, facilitates in a symmetrical fashion.

It is noted that according to an embodiment of the invention, self backwashing filtering unit 200 includes hydraulic adapters (not shown) other than barrier 214, which are adapted to control at least one hydraulic attribute of the unfiltered liquid, prior to arrival of the unfiltered liquid to filter 220. Examples to such hydraulic attributes are pressure, flux, and so forth.

According to an embodiment of the invention, filter 220 is a strainer, which is adapted to filter contaminants which are larger than a physical size threshold, out of the unfiltered liquid. According to an embodiment of the invention, filter 220 includes reinforcement grid 222, which is illustrated in figures 2 and 3, which is adapted to support filter 220 against pressures, such as though not limited to, the first pressure which is applied on filter 220 by the unfiltered liquid which is about to be filtered. According to an embodiment of the invention, reinforcement grid 222 includes a set of reinforcement rings which are connected by radial bars.

According to an embodiment of the invention, filter 220 is shaped as to facilitate the forcing of at least a portion of the contaminants that were separated from filter 220 towards the direction of inlet opening 262 of second filtering unit 260. For example, in the illustrated embodiment of self backwashing filtering unit 200, filter 220 has an oblique surface, whereby the slope is designed for that purpose. Contaminants reach second filtering unit 260 via inlet opening 262 either spontaneously as part of the gradual movement of a portion of unfiltered liquid reaching second filtering unit 260, or as a result of being separated from filter 220 by filtered liquid which is jetted onto filter 220 by hydraulic rotating backwasher 230. Second filtering 260 unit includes secondary filter 264 which is adapted to filter the trapped residue contained in second filtering unit 260, to thus provide additional filtered liquid.

It is noted that according to an embodiment of the invention, self backwashing filtering unit 200 includes multiple second filtering units 260, wherein the multiple filtering units can filter unfiltered liquid either serial or parallel to each other, or a combination thereof. According to an embodiment of the invention, at least one second filtering unit 260 includes multiple secondary filters 264.

According to an embodiment of the invention, self backwashing filtering unit 200 includes residue valve 266 which is adapted to control a release of the residue into residue outlet pipe 246. According to some embodiments of the invention, control over of the release of the residue is needed in order to comply with other features of self backwashing filtering unit 200. According to an embodiment of the invention, self backwashing filtering unit 200 is adapted to control residue valve 266, so as to release residue to residue outlet pipe 246 according to one or more release criteria. According to an embodiment of the invention, residue valve 266 is included in second filtering unit 260. According to an embodiment of the invention, self backwashing filtering unit 200 includes residue funnel 268, which is adapted to facilitate the movement of residue into residue outlet pipe 246.

According to an embodiment of the invention, hydraulic rotating backwasher 230 includes one or more secondary filter backwashing jetting heads 236, which are adapted to jet filtered liquid at high pressure onto secondary filter 264, wherein the jetting of the filtered liquid by the one or more secondary filter backwashing jetting heads 236 results the separation at least a portion of residual contaminants 102 from secondary filter 264.

According to an embodiment of the invention, at least some of secondary filter backwashing jetting heads 236 are positioned in an oblique angle in relation to secondary filter 264, in order to force at least a portion of the residual contaminants 102, separated from secondary filter 234, towards a desired direction, such as in the direction of residue outlet pipe 246. It is further noted that according to an embodiment of the invention, secondary filter 264 is shaped as to facilitate the forcing of at least a portion of residual contaminants 102 in the desired direction, which is, conveniently, the direction of residue outlet pipe 246.

According to an embodiment of the invention, at least one secondary filter backwashing jetting head 236 is adapted both to: (a) separate at least a portion of residual contaminants 102 from secondary filter 264 by jetting filtered liquid at high pressure onto secondary filter 264; and (b) rotate hydraulic rotating backwasher 230 by jetting high pressure filtered liquid in at least a partially opposing direction of the rotation of hydraulic rotating backwasher 230. Conveniently, secondary filter backwashing jetting heads 236 are positioned at an oblique angle in relation to both secondary filter 264 and to the direction of rotation of hydraulic rotating backwasher 230, as to carry out both of the operations.

According to an embodiment of the invention, hydraulic rotating backwasher 230 includes one or more pipe arms, which are adapted to rotate around an axis of rotation (which, conveniently, is a symmetry axis of filter 220, but it is not necessarily so), and to convey high pressure filtered liquid to one or more of the jetting heads 232, thrusting jetting heads 234 and/or secondary filter backwashing jetting heads 236 which are positioned on the pipe arm. Conveniently, the pipe arms of hydraulic rotating backwasher 230 are identical to each other, and are positioned in a symmetric fashion around the axis of the rotation, but it is not necessarily so.

For example, hydraulic rotating backwasher 230 which is illustrated in figure 2, includes two identical pipe arms which oppose each other, wherein each pipe arm includes two jetting heads 232 which are further adapted to rotate hydraulic rotating backwasher 230, and one secondary filter backwashing jetting heads 236, which is also adapted to rotate hydraulic rotating backwasher 230.

It is noted that according to an embodiment of the invention, hydraulic rotating backwasher 230 is adapted to jet one or more cleaning liquids that are not the filtered liquid. According to an embodiment of the invention, hydraulic rotating backwasher 230 is adapted to: (a) mix filtered liquid with a cleaning ingredient (which may and may not be a cleaning liquid) into a cleaning solution, and (b) jet the cleaning solution onto at least one of filter 220 and secondary filter 264. Conveniently, according to embodiments of the invention in which hydraulic rotating backwasher 230 is adapted to jet liquids other than filtered liquid, self backwashing filtering unit 200 further includes additional components (not shown) which are adapted to carry out at least some of receiving, storing, and providing of the cleaning liquid or the cleaning ingredient to hydraulic rotating backwasher 230. It is noted that in some situations, the backwashing with the cleaning liquid or the cleaning solution is carried out when self backwashing filtering unit 200 is not filtering, and, conveniently, does not include filtered liquid.

It is noted that since some embodiments of the invention are adapted to use cleaning liquids other than the filtered liquid, any person skilled in the art will immediately appreciate that on every reference to filtered liquid being used for backwashing, another cleaning fluid could be used.

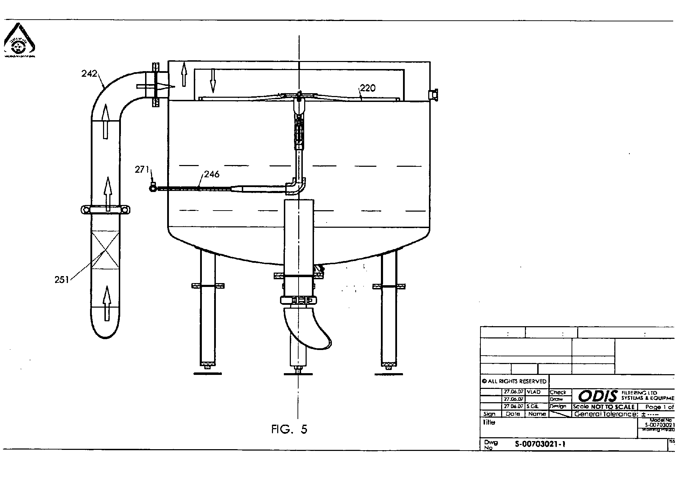

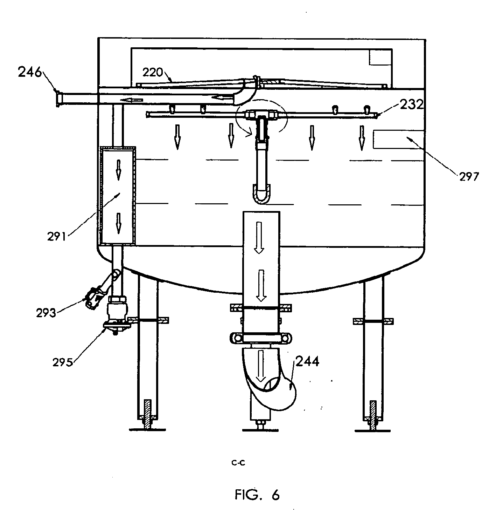

Figures 5 and 6 illustrate a cross-section view of a self backwashing filtering unit, according to another embodiment of the invention.

Figure 5 and 6 illustrate a backwashing filtering unit that include an additional inlet 271 for receiving pressurized fluid that can rotate the hydraulic rotating backwasher 220 and be used for backwashing the filter.

In addition, figure 6 illustrates a residue outlet pipe 246 that is connected to a residue filter 291 such that residue falls towards residue filter 291. The residue filter 291 can be backwashed and can be drained by fluid provided from (or drained through) two valves 293 and 295. Figure 6 also illustrates a fluid limiter 297 that prevents filtered fluid to exceed a certain level.

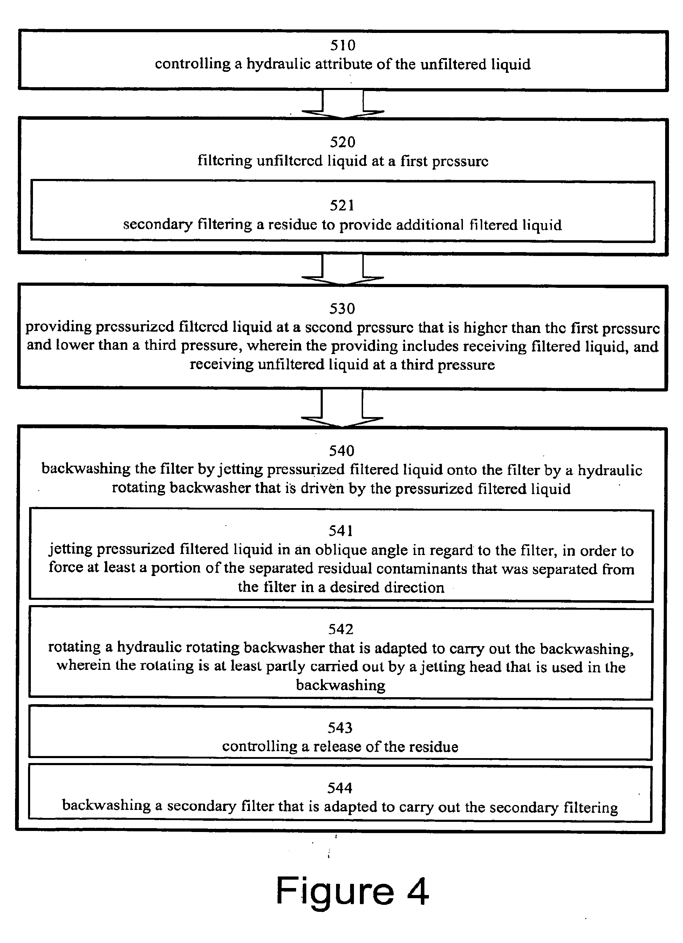

Figure 4 illustrates method 500 for backwashing a filter.

According to an embodiment of the invention, method 500 starts with stage 510 of controlling at least one hydraulic attribute of the unfiltered liquid, wherein controlling conveniently includes operations such as, though not limited to, limiting the hydraulic attribute according to one or more predetermined thresholds, altering the hydraulic attribute and so forth. Examples to such hydraulic attributes are pressure, flux, and so forth.

According to an embodiment of the invention, the controlling includes controlling flow of the unfiltered liquid toward a filter of the self backwashing filtering unit by using a barrier, wherein unfiltered liquid that enters an unfiltered liquid compartment of the self backwashing filtering unit is able to reach the filter only by spilling over the barrier (which is conveniently of circular shape). In this way the barrier facilitates a symmetrical arrival of unfiltered liquid to the filter, and assists in setting the pressure of the arriving unfiltered liquid to a first pressure.

According to an embodiment of the invention, the controlling includes storing the unfiltered liquid in an unfiltered liquid compartment, prior to stage 520. According to an embodiment of the invention, the controlling includes raising unfiltered liquid to a level of the unfiltered liquid compartment. Conveniently, the pressure that is applied to the unfiltered liquid during the raising is responsive to the first pressure.

It is noted that according to different embodiments of the invention, method 500 is adapted for one or more types of liquids, wherein according to some of the embodiments of the invention, method 500 is adapted specifically for a certain type of liquid (which may be needed, for example, for liquids that have specific chemical properties which demand specific adaption), while according to other embodiments of the invention, method 500 is adapted for multiple types of liquids. Especially, according to some embodiments of the invention, method 500 is adapted to filtrating and to treating water, wherein according to some of these embodiments, method 500 is adapted to filtrating and treating water that is used in irrigation systems. It is noted that the adaptation of at least some of the stages of method 500 to the filtering and to the treating of different liquid is straightforward, as is appreciated by any person skilled in the art.

According to an embodiment of the invention, stage 510 is followed by stage 520 of filtering unfiltered liquid at a first pressure. It is noted that according to an embodiment of the invention, method 500 starts with stage 520.

According to different embodiments of the invention, the filtering is carried out by different sorts of filters, strainers, or combinations thereof. It is noted that accumulation of contaminants is typical of many sort of filters and strainers, and thus according to different embodiments of the invention, method 500 is adapted to handle contaminant accumulation of different types of filters and strainers suffering from accumulation of contaminants, that are suitable to be backwashed, as is described below.

According to an embodiment of the invention, the filtering is carried out by a gravitational filter, wherein liquid is passing through the filter as a result of the gravitational force that is applied to the liquid. According to an embodiment of the invention, the filtering includes pressuring unfiltered liquid through the filter. It is noted that according to an embodiment of the invention, the filtering is carried out via a gravitational filter and includes pressuring the unfiltered liquid. It is noted that according to different embodiments of the invention, the filtering includes a passing of the unfiltered liquid through the filter by different means, and that only a few examples of such means where offered, in order to clarify the invention.

Referring to the examples set forward in the previous drawings, stage 520 is carried out by filter 220.

According to an embodiment of the invention, stage 520 includes stage 521 of secondarily filtering residue to thus provide additional filtered liquid, wherein, conveniently, the secondary filtering is carried out by a secondary filter which is different from the filter that is used during stage 520.

Referring to the examples set forward in the previous drawings, stage 521 is carried out by secondary filter 264.

Stage 520 is followed by stage 530 of providing pressurized filtered liquid at a second pressure that is higher than the first pressure, wherein the providing includes receiving filtered liquid, and receiving unfiltered liquid. It is noted that according to an embodiment of the invention, method 500 starts with stage 530.

Stage 530 includes facilitating the energy of the pressured unfiltered liquid to pressurize the filtered liquid to the second pressure. Every person skilled in the art understands that the second pressure must be lower than the first pressure. The second pressure has to be higher than the first pressure, in order to facilitate the backwashing of stage 540.

Stage 530 is followed by stage 540 of backwashing the filter by jetting filtered liquid onto the filter at a second pressure via a hydraulic rotating backwasher comprised in the container, driven by filtered liquid, wherein the second pressure is much higher than the first pressure. Conveniently, the jetting causes at least a portion of the residual contaminants that have accumulated on or in the filter to separate from the filter, thus returning a flow of liquid through the filter to a desired level. It is noted that, conveniently, stage 540 is at least partially concurrent to stage 520.

Referring to the examples set forward in the previous drawings, stage 540 is carried out by hydraulic rotating backwasher 230.

According to an embodiment of the invention, the stage 540 includes stage 541 of jetting pressurized filtered liquid in an at least one oblique angle in relation to the filter, in order to force at least a portion of the separated residual contaminants (that was separated from the filter) towards a desired direction, such as in the direction of a residue outlet pipe. According to an embodiment of the invention, stage 541 includes changing at least one of the oblique angles to a different angle in relation to the filter. According to different embodiments of the invention, the changing of at least one of the oblique angles to a different angle could be carried out manually by an operator of the self backwashing filtering unit, or could be carried out autonomously by the self backwashing filtering unit.

It is further noted that according to an embodiment of the invention, stage 540, with or without regards to the jetting of filtered liquid at an oblique angle, includes jetting filtered liquid onto the filter which is shaped as to facilitate the forcing of at least a portion of the separated residual contaminants towards a desired direction, such as towards an residue outlet pipe. For example, referring to the embodiment which is illustrated in figure 2, the filter has an oblique surface, whereby the slope is designed for that purpose.

Referring to the examples set forward in the previous drawings, stage 541 is carried out by hydraulic rotating backwasher 230 and, according to an embodiment of the invention, especially by one ore more jetting heads 232.

According to an embodiment of the invention, stage 540 includes stage 542 of rotating the hydraulic rotating backwasher, wherein the rotating is at least partly facilitated using a jetting head that is used in the backwashing. It is noted that according to other embodiments of the invention, other ways of rotating the hydraulic rotating backwasher are implemented, wherein, according to some other embodiments of the invention, stage 540 includes rotating the hydraulic rotating backwasher, wherein the rotating includes jetting filtered liquid from thrusting jetting heads.

It is noted that following the teachings of the invention, in order to effectively separate residual contaminants from the filter, the hydraulic rotating backwasher is adapted to rotate around an axis of rotation (conveniently, the axis of rotation is a symmetry axis of the filter, but it is not necessarily so), which results in the jetting of filtered liquid (by each jetting head or otherwise) onto different parts of the filter.

Different embodiments of the invention implement different ways of rotating the hydraulic rotating backwasher. According to an embodiment of the invention, the rotating includes facilitating rotation of the hydraulic rotating backwasher by the jetting of filtered liquid by one or more thrusting jetting heads, in a direction which at least partially opposes a direction of rotation of the hydraulic rotating backwasher.

According to an embodiment of the invention, stage 540 includes rotating the hydraulic rotating backwasher by jetting filtered liquid onto one or more protrusions of the self backwashing filtering unit, wherein the protrusions are adapted to facilitate the rotation of the hydraulic rotating backwasher by countering filtered liquid that is jetted onto the hydraulic rotating backwasher. It is noted that according to some embodiments of the invention, stage 520 includes rotating the filter, wherein, according to one such embodiment of the invention, stage 540 further includes revolving the filter by jetting filtered liquid onto one or more protrusions which are included in the filter.

Referring to the examples set forward in the previous drawings, stage 542 is carried out by jetting heads 232, and/or by thrusting jetting heads 264.

According to an embodiment of the invention, stage 540 includes stage 543 of controlling a release of the residue, for example into a residue outlet pipe. According to some embodiments of the invention, the controlling of the release of the residue is needed in order to comply with another stage of method 500. According to an embodiment of the invention, the controlling includes releasing residue according to one or more release criteria. According to an embodiment of the invention, stage 540, with or without regard to stage 543, includes collecting the residue.

According to an embodiment of the invention, stage 540 includes stage 544 of backwashing a secondary filter, adapted to carry out the secondary filtering, by jetting filtered water onto the secondary filter. Conveniently, stage 544 is carried out by the same hydraulic rotating backwasher that carries out the backwashing of stage 540.

According to an embodiment of the invention, stage 544 includes jetting filtered liquid at an oblique angle onto the secondary filter, in order to force at least a portion of the residual contaminants that were separated from the secondary filter in a desired direction, such as in the direction of the residue outlet pipe. It is further noted that according to an embodiment of the invention, the secondary filter is shaped as to facilitate the forcing of at least a portion of the residual contaminants in the desired direction, which is, conveniently, the direction of the residue outlet pipe. It is noted that, according to an embodiment of the invention, stage 542 is carried out at least partially by a secondary filter backwashing jetting head that is used in stage 544.

Referring to the examples set forward in the previous drawings, stage 544 is carried out by hydraulic rotating backwasher 230, and, according to an embodiment of the invention, especially by secondary filter backwashing heads 236.

It is noted that according to an embodiment of the invention, at least some of the stages included in stages 530 through 535 involves one or more cleaning liquid other than the filtered liquid. According to an embodiment of the invention, stage 540 further includes mixing filtered liquid with at least one cleaning ingredient (which may and may not be a cleaning liquid) into a cleaning solution, and jetting the cleaning solution onto at least one of the filter or the secondary filter. It is noted that in some situations, the stage 540 that involves the use of cleaning liquid or cleaning solution is carried out separately from stage 520.

It is noted that since some embodiments of the invention include using cleaning liquids other than the filtered liquid, any person skilled in the art will immediately appreciate that on every reference to filtered liquid being used during stage 540, any cleaning fluid could be used.

The present invention can be implemented by employing conventional tools, methodology and components. Accordingly, the details of such tools, components and methodology are not set forth herein in detail. In the above descriptions, numerous specific details are set forth, in order to provide a thorough understanding of the present invention. However, it should be recognized that the present invention might be practiced without resorting to the details specifically set forth.

Only few elucidatory embodiments of the present invention and but a few examples of its versatility are shown and described in the present disclosure. It is to be understood that the present invention is capable of use in various other combinations and environments and is capable of changes or modifications within the scope of the inventive concept as expressed herein.

## Claims

1. A self backwashing filtering unit, comprising:
a container, adapted to contain filtered liquid;
a filter that filters unfiltered liquid at a first pressure to admit the filtered liquid into the container;
a pump, adapted to receive filtered liquid, to receive unfiltered liquid and to provide pressurized filtered liquid at a second pressure that is higher than the first pressure; and
a hydraulic rotating backwasher that is driven by the pressurized filtered liquid, adapted to backwash the filter by jetting the pressurized filtered liquid onto the filter.

2. The self backwashing filtering unit according to claim 1, wherein the filter is a gravitational filter.

3. The self backwashing filtering unit according to claim 1 or 2, further comprising a hydraulic adapter that is adapted to control a hydraulic attribute of the unfiltered liquid, prior to arrival of the unfiltered liquid to the filter.

4. The self backwashing filtering unit according to any one of claims 1 to 3, further comprising a barrier that is adapted to spread the unfiltered fluid among multiple parts of the filter and to reduce the pressure of the unfiltered fluid to the first pressure.

5. The self backwashing filtering unit according to any one of claims 1 to 4, wherein the filter is shaped as to facilitate the forcing of at least a portion of separated residual contaminants towards a residue:outlet pipe.

6. The self backwashing filtering unit according to any one of claims 1 to 5, further comprising a secondary filter, adapted to filter a residue to provide additional filtered liquid.

7. The self backwashing filtering unit according to claim 6, wherein the hydraulic rotating backwasher is further adapted to backwash the secondary filter.

8. The self backwashing filtering unit according to any one of claims 1 to 7, wherein a jetting head of the hydraulic rotating backwasher is adapted to: (a) backwash at least one of the filter and the secondary filter; and (b) to rotate the hydraulic rotating backwasher by jetting filtered liquid in at least partially opposing direction to a direction of a rotation of the hydraulic rotating backwasher.

9. The self backwashing filtering unit according to any one of claims 1 to 8, further comprising a protrusion adapted to facilitate the rotation of the hydraulic rotating backwasher by countering jetted filtered liquid.

10. A method for backwashing a filter, comprising: providing pressurized filtered liquid at a second pressure that is higher than the first pressure, wherein the providing includes receiving filtered liquid, and receiving unfiltered liquid; backwashing the filter by jetting pressurized filtered liquid onto the filter by a hydraulic rotating backwasher, that is driven by filtered liquid.

11. The method according to claim 10, further comprising filtering unfiltered liquid to provide filtered liquid, wherein the filtering is at least partially concurrent to the backwashing.

12. The method according to claim 11, wherein the filtering is carried out by a gravitational filter.

13. The method according to claim 11 or 12, further comprising controlling a hydraulic attribute of the unfiltered liquid, wherein the controlling precedes the filtering.

14. The method according to any one of claims 11, further comprising spreading the unfiltered fluid among multiple parts of the filter and reducing the pressure of the unfiltered fluid to the first pressure.

15. The method according to claim 10, wherein the filtering is carried out by a filter that is shaped as to facilitate the forcing of at least a portion of separated residual contaminants towards a residue outlet pipe.
